# FASCICULE DE BREVET EUROPEEN

(11) **EP 2 920 870 B1**
(45) Date de publication et mention de la délivrance du brevet: **19.02.2020**
(21) Numéro de dépôt: 13795201.6
(22) Date de dépôt: 15.11.2013
(51) Int. Cl.: H02K 49/06, H02K 26/00

(54) **FREIN MAGNETIQUE A HYSTERESIS A CRANTAGE REDUIT**
MAGNETHYSTERESEBREMSE MIT GERINGEN RASTKRÄFTEN
LOW COGGING MAGNETIC HYSTERESIS BRAKE

(30) Priorité: 19.11.2012 FR 1203096
(43) Date de publication de la demande: 23.09.2015
(73) Titulaire: Safran Electronics & Defense, 92100 Boulogne-Billancourt (FR)
(72) Inventeur: TILLY, Bruno, F-92100 Boulogne-Billancourt (FR); PIATON, Jérôme, F-92100 Boulogne-Billancourt (FR)
(74) Mandataire: Lavialle, Bruno François Stéphane
(86) Numéro de dépôt international: PCT/EP2013/073973
(87) Numéro de publication internationale: WO 2014/076247

(56) Documents cités:
- FR-A- 1 354 414
- FR-A1- 2 773 923
- SU-A1- 1 001 354
- US-A- 5 121 018

## Description

La présente invention concerne un frein magnétique à hystérésis utilisable, par exemple, dans les interfaces homme/machine pour engendrer un effort résistant au déplacement d'un objet, tel qu'un instrument de commande, manipulé par un utilisateur.

L'effort résistant en question est le résultat d'une friction magnétique exercée sur une pièce reliée à l'objet à freiner.

Un frein magnétique à hystérésis comprend généralement un stator ayant des pôles en regard desquels un rotor est monté pour pivoter. Le rotor est réalisé dans un matériau à forte rémanence magnétique et le stator est pourvu de moyens pour engendrer un champ magnétique auquel le rotor est soumis de sorte à produire une résistance au déplacement du rotor.

Le rotor est relié à un instrument déplacé par un utilisateur par exemple pour commander un dispositif tel qu'un moteur. Le champ magnétique auquel le rotor est soumis produit une résistance au déplacement du rotor et donc une résistance au déplacement de l'instrument manipulé par l'utilisateur.

Le document FR 2 773 923 A1 décrit un frein électromagnétique à hystérésis selon l'art antérieur.

Il existe deux types de freins selon que la friction procurée par le frein est constante ou variable.

Dans les freins à friction constante, les moyens engendrant le champ magnétique sont des aimants engendrant un champ magnétique constant. L'invention ne concerne pas ce type de frein.

Dans les freins à friction commandée, les moyens engendrant le champ magnétique sont formés d'une bobine dont l'alimentation est pilotée pour faire varier le champ magnétique produit. Dans le cas d'un instrument de commande d'un régime moteur, ceci permet par exemple d'augmenter la résistance au déplacement de l'instrument manipulé par l'utilisateur au fur et à mesure que le régime moteur augmente ou d'élever brutalement la résistance au déplacement de l'instrument de commande lorsque le régime du moteur va sortir d'une plage prédéfinie de fonctionnement optimal. Cette caractéristique rend les freins à friction commandée particulièrement intéressants notamment dans le domaine des interfaces homme-machine.

Toutefois, ces freins à friction commandée présentent un couple de crantage préjudiciable au ressenti de l'utilisateur. Un tel couple de crantage est le résultat d'une brusque baisse du courant d'excitation circulant dans la bobine alors que le rotor est arrêté. Cette brusque baisse laisse subsister localement dans le rotor un champ rémanent qui s'oppose au déplacement du rotor sur une partie seulement de son mouvement de rotation, d'où la perception d'un crantage par l'utilisateur. Ce phénomène n'apparaît pas lorsque la baisse de courant se produit quand le rotor est en mouvement, car ce mouvement permet une annulation progressive du champ rémanent sur toute la circonférence du rotor.

Il a été envisagé deux solutions pour résoudre ce problème. Dans la première, on utilise pour le rotor un matériau faiblement rémanent. Pour l'obtention d'une friction prédéterminée, il est alors nécessaire d'augmenter le volume du rotor et donc le poids de celui-ci, ce qui est incompatible avec certaines applications notamment dans le domaine aéronautique. Dans la deuxième, une préconisation d'emploi prévoit de devoir toujours maintenir le rotor en mouvement dans les phases de diminution de l'excitation du frein à friction. Ceci revient à imposer un mouvement à l'utilisateur dans des circonstances particulières alors que ce mouvement peut être inadapté à la commande du dispositif dans ces circonstances.

Lorsqu'un couple de crantage est apparu, le seul moyen de l'éliminer est d'augmenter le courant d'excitation jusqu'à son niveau maximum puis de le baisser en maintenant le rotor en mouvement. Là encore, ces opérations peuvent être incompatibles avec une commande du dispositif adaptée à la situation.

Un but de l'invention est de fournir un moyen pour éliminer au moins en partie l'inconvénient ci-dessus.

A cet effet, on prévoit un frein magnétique à hystérésis selon la revendication 1.

Ainsi, lors de l'arrêt brutal de l'excitation, l'aimant va constituer un moyen pour homogénéiser le champ rémanent dans le rotor.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue schématique d'un frein selon l'invention, en coupe selon un plan contenant l'axe de rotation du rotor,
- la figure 2 est une vue en coupe transversale de ce frein,
- la figure 3 est une vue agrandie de détail de portions du rotor et du stator en regard l'une de l'autre.

Le frein conforme à l'invention est ici décrit en application à un instrument de commande, comme une manette ou un manche de commande, destiné à être manipulé par un utilisateur. L'instrument de commande est ici un levier pivotant.

En référence aux figures, l'invention concerne un frein magnétique à hystérésis, généralement désigné en 1, comportant un stator 2 équipé d'au moins une bobine de commande 3. Le stator 2 comprend une armature dans laquelle a été ménagée une rainure 4 de forme circulaire et d'axe central 5. La rainure 4 a un flanc extérieur et un flanc intérieur qui présentent respectivement des reliefs formant des pôles 6.1, 6.2 du stator 2. Les pôles 6.1 sont décalés angulairement des pôles 6.2 de sorte que chaque pôle 6.1 se trouve en regard de l'espace s'étendant entre deux pôles 6.2 adjacents l'un à l'autre. La bobine de commande 3 a un diamètre voisin de celui de la rainure 4 et est montée dans le stator 2 coaxialement à la rainure 4 de telle manière que, lorsque la bobine de commande 3 est soumise à un courant d'excitation, elle engendre des flux magnétiques passant des pôles 6.1 aux pôles 6.2, ou inversement, en traversant la rainure 4 selon une direction non radiale. La bobine de commande 3 est reliée à une unité de pilotage, connue en elle-même et non représentée ici, agencée pour alimenter la bobine

Le frein 1 comprend également un rotor 7 de forme annulaire qui est reçu dans la rainure 4 à pivotement autour de l'axe 5. Le rotor 7 est en matériau ferromagnétique. Le rotor 7 est relié par une chaîne de transmission de mouvement à l'instrument de commande. Dans l'exemple ici décrit, la chaîne de transmission comprend un train d'engrenages ayant un rapport multiplicateur tel qu'un pivotement d'une dizaine de degrés de l'instrument de commande engendre plusieurs tours du rotor 7.

Lorsque la bobine de commande 3 est soumise à un courant d'excitation, elle engendre des flux magnétiques passant des pôles 6.1 aux pôles 6.2, ou inversement, en traversant la rainure 4 et donc le rotor 7 dans lequel ces flux induisent des champs magnétiques locaux. Ainsi, dans le rotor 7, chaque flux a une direction de cheminement ayant une composante radiale et une composante circonférentielle. En cas de coupure brutale de l'excitation alors que le rotor est immobile, un champ rémanent est créé localement dans le rotor à chaque endroit où un flux magnétique a circulé et a une direction identique à celle du flux.

Le frein 1 comprend au moins un aimant 8 monté sur le stator 2 en regard du rotor 7 et ayant une puissance suffisante de manière à engendrer localement dans le rotor 7 un niveau d'induction sensiblement égal à un niveau d'induction maximal engendré par la bobine lorsque celle-ci est alimentée.

Plus précisément, le frein comprend un aimant 8.1 fixé entre deux pôles 6.1 adjacents l'un à l'autre et un aimant 8.2 fixé entre deux pôles 6.2 dont l'un se trouve en face de l'aimant 8.1. Les aimants sont positionnés sensiblement en vis-à-vis l'un de l'autre, nonobstant un décalage angulaire correspondant au décalage angulaire entre les pôles 6.1, 6.2. Les aimants 8 sont polarisés de manière à engendrer un flux magnétique radial qui traverse le rotor 7 selon une direction ayant une composante radiale et une composante circonférentielle tout comme le flux engendré par la bobine de commande 3 lorsqu'il traverse le rotor 7 au même endroit.

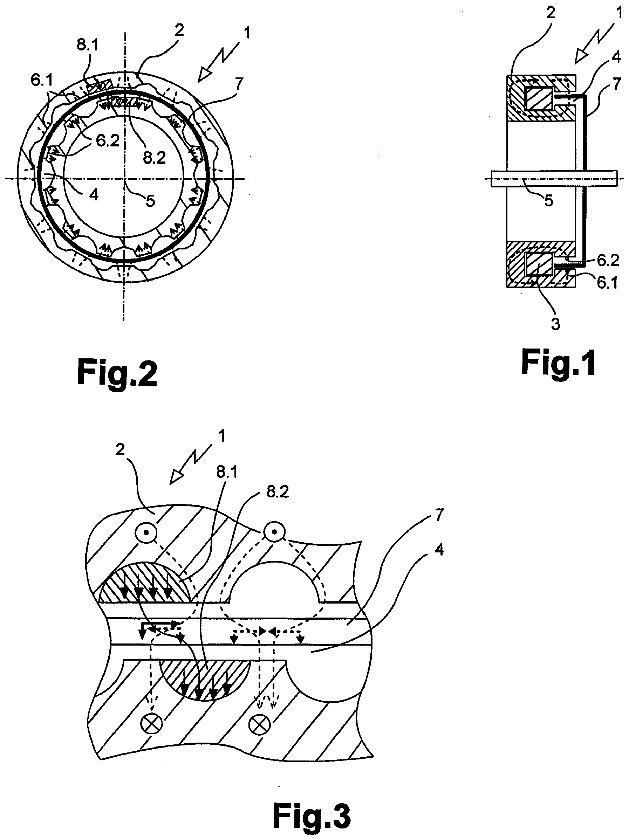

Comme mieux visible à la figure 3, le flux engendré par les aimants 8 va faire en sorte que les champs magnétiques locaux qui ont été créés dans le rotor 7 soient tous orientés dans le même sens, éliminant l'effet de crantage.

Bien entendu, l'invention n'est pas limitée aux modes de réalisation décrits mais englobe toute variante entrant dans le champ de l'invention telle que définie par la revendication.

En particulier, le frein peut comprendre un seul aimant ou au contraire plusieurs aimants, par exemple répartis autour de la rainure 4.

Le frein peut avoir une autre structure que celle décrite et représentée ici. Le rotor peut par exemple avoir la forme d'un disque ou d'un anneau reçu dans une gorge ménagée dans le stator.

L'aimant peut être monté à la place d'un des pôles du stator.

## Revendications

1. Frein magnétique à hystérésis comportant un stator (2) équipé d'au moins une bobine de commande (3) et un rotor (7) monté mobile en regard de premiers pôles (6.1) et deuxièmes pôles (6.2) du stator (2), la bobine de commande (3) présentant une forme annulaire et étant enveloppée par une armature, le rotor (7) ayant une forme annulaire et étant reçu à pivotement autour de son axe central dans une rainure circulaire (4) du stator (2) établissant deux entrefers radiaux, la rainure circulaire (4), qui est formée dans une paroi axiale de l'armature, présentant un flanc extérieur et un flanc intérieur pourvus respectivement de reliefs formant les premiers pôles (6.1) et les deuxièmes pôles (6.2) du stator (2), lesdits pôles ayant le même pas polaire, les premiers pôles (6.1) étant décalés angulairement des deuxièmes pôles (6.2) par une moitié dudit pas polaire, la bobine de commande (3) étant montée dans le stator (2) co-axialement à la rainure circulaire (4), le rotor étant en matériau ferromagnétique faiblement rémanent, **caractérisé en ce que** le frein comprend un premier aimant (8.1) et un deuxième aimant (8.2) montés sur le stator (2) en regard du rotor (7) et ayant une puissance suffisante de manière à engendrer localement sur la circonférence du rotor (7) un niveau d'induction sensiblement égal à un niveau d'induction maximal engendré par la bobine de commande (3) lorsque celle-ci est alimentée, le premier aimant (8.1) et le deuxième aimant (8.2) étant polarisés de manière à engendrer un flux magnétique radial, le premier aimant (8.1) étant fixé entre deux premiers pôles (6.1) adjacents l'un à l'autre, et le deuxième aimant (8.2) étant fixé entre deux deuxièmes pôles (6.2) adjacents l'un à l'autre, l'un desdits deuxièmes pôles (6.2) se trouve en face du premier aimant (8.1), le premier aimant (8.1) et le deuxième aimant (8.2) étant montés chacun sur des flancs opposés de la rainure.

## Patentansprüche

1. Magnethysteresebremse, umfassend einen Stator (2), der mit mindestens einer Steuerspule (3) ausgestattet ist, und einen Rotor (7), der beweglich in Bezug auf erste Pole (6.1) und zweite Pole (6.2) des Stators (2) montiert ist, wobei die Steuerspule (3) eine Ringform hat und von einem Rahmen umgeben ist, wobei der Rotor (7) eine Ringform hat und um seine Mittelachse schwenkbar in einer kreisförmigen Nut (4) des Stators (2) zwei radiale Spalte bildend aufgenommen ist, wobei die kreisförmige Nut (4), die in einer axialen Wandung des Rahmens ausgebildet ist, eine äußere Flanke und eine innere Flanke aufweist, die jeweils mit Reliefs versehen sind, welche die ersten Pole (6.1) und die zweiten Pole (6.2) des Stators (2) bilden, wobei die Pole die gleiche Polteilung aufweisen, die ersten Pole (6.1) gegenüber den zweiten Polen (6.2) um eine Hälfte der genannten Polteilung winkelversetzt sind, die Steuerspule (3) in dem Stator (2) koaxial mit der kreisförmigen Nut (4) montiert ist, der Rotor aus einem ferromagnetischen, schwach remanenten Material ist, **dadurch gekennzeichnet, dass** die Bremse einen ersten Magneten (8.1) und einen zweiten Magneten (8.2) umfasst, die auf dem Stator (2) gegenüberliegend montiert sind und eine Stärke aufweisen, die ausreicht, um lokal auf dem Umfang des Rotors (7) ein Induktionsniveau zu generieren, das im Wesentlichen gleich einem maximalen Induktionsniveau ist, das von der Steuerspule (3) erzeugt wird, wenn diese gespeist wird, wobei der erste Magnet (8.1) und der zweite Magnet (8.2) so polarisiert sind, dass sie einen radialen magnetischen Fluss generieren, der erste Magnet (8.1) zwischen zwei nebeneinander liegenden ersten Polen (6.1) befestigt ist, und der zweite Magnet (8.2) zwischen zwei nebeneinander liegenden zweiten Polen (6.2) befestigt ist, wobei sich einer der beiden genannten zweiten Pole (6.2) gegenüber dem ersten Magneten (8.1) befindet, der erste Magnet (8.1) und der zweite Magnet (8.2) jeweils auf der Nut gegenüberliegenden Flanken montiert sind.

## Claims

1. Magnetic hysteresis brake comprising a stator (2) equipped with at least one control winding (3) and a rotor (7) mounted mobile with respect to first poles (6.1) and second poles (6.2) of the stator (2), the control winding (3) being annular and surrounded by an armature, the rotor (7) being annular and received so as to be able to pivot about its central axis in a circular groove (4) of the stator (2) giving rise to two radial air gaps, the circular groove (4), which is formed in an axial wall of the armature, having an outer flank and an inner flank respectively provided with reliefs forming the first poles (6.1) and the second poles (6.2) of the stator (2), said poles having the same polar pitch, the first poles (6.1) being angularly offset from the second poles (6.2) by half of said polar pitch, the control winding (3) being mounted in the stator (2) coaxially with the circular groove (4), the rotor being made of a ferromagnetic material having low remanence, **characterized in that** the brake comprises a first magnet (8.1) and a second magnet (8.2) that are mounted on the stator (2) facing the rotor (7) and are sufficiently powerful to produce, locally on the circumference of the rotor (7), a level of induction that is essentially equal to a maximum level of induction generated by the control winding (3) when the latter is energized, the first magnet (8.1) and the second magnet (8.2) being polarized so as to generate a radial magnetic flux, the first magnet (8.1) being fixed between two mutually adjacent first poles (6.1), and the second magnet (8.2) being fixed between two mutually adjacent second poles (6.2), one of said second poles (6.2) being located facing the first magnet (8.1), the first magnet (8.1) and the second magnet (8.2) each being mounted on opposite flanks of the groove.
